# FASCICULE DE BREVET EUROPEEN

(11) **EP 3 412 522 B1**
(45) Date de publication et mention de la délivrance du brevet: **26.08.2020**
(21) Numéro de dépôt: 18173733.9
(22) Date de dépôt: 23.05.2018
(51) Int. Cl.: B60S 1/04

(54) **DISPOSITIF DE MAINTIEN D'UNE TIMONERIE D'UN MÉCANISME D ESSUYAGE, PALIER D'UNE TIMONERIE, SOUS-ENSEMBLE DE TIMONERIE ET TIMONERIE ASSOCIÉS, ET PROCÉDÉ DE MISE EN PLACE D'UN DISPOSITIF DE MAINTIEN SUR UNE TIMONERIE**
HALTEVORRICHTUNG EINES STEUERSTANDS EINES REINIGUNGSMECHANISMUS, LAGER EINES STEUERSTANDS, ENTSPRECHENDE UNTEREINHEIT EINES STEUERSTANDS UND ENTSPRECHENDER STEUERSTAND, UND EINSATZVERFAHREN EINER HALTEVORRICHTUNG IN EINEN STEUERSTAND
DEVICE FOR HOLDING A LINKAGE OF A WIPING MECHANISM, LINKAGE BEARING, ASSOCIATED LINKAGE SUBASSEMBLY AND LINKAGE, AND METHOD FOR PLACING A HOLDING DEVICE ON A LINKAGE

(30) Priorité: 05.06.2017 FR 1754965
(43) Date de publication de la demande: 12.12.2018
(73) Titulaire: Valeo Systèmes d'Essuyage, 78322 Le Mesnil Saint Denis (FR)
(72) Inventeur: VIARD, Robin, 63500 ISSOIRE (FR); RENOUX, Pascal, 63500 ISSOIRE (FR); KUCHLY, Nicolas, 63500 ISSOIRE (FR)
(74) Mandataire: Valeo Vision

(56) Documents cités:
- DE-A1- 10 313 540
- DE-A1-102009 043 116
- DE-A1-102014 207 287
- FR-A1- 2 972 163

## Description

La présente invention se rapporte au domaine des timoneries des mécanismes d'essuyage, notamment pour véhicule automobile, et plus particulièrement au blocage de ces timoneries dans une position de transport. Plus spécifiquement, la présente invention se rapporte à un dispositif de maintien d'une timonerie comprenant au moins une manivelle et au moins une bielle dans une position de transport, à un palier d'une timonerie destiné à coopérer avec le dispositif de maintien, à un sous-ensemble de timonerie et à une timonerie comportant un tel dispositif de maintien bloqués dans une position de transport et à un procédé de mise en place de ce dispositif de maintien sur la timonerie.

Les timoneries de mécanisme d'essuyage de véhicules automobiles sont des systèmes articulés en différents endroits. Cette articulation est nécessaire pour le bon fonctionnement du système d'essuyage une fois la timonerie installée sur le véhicule automobile. Cependant, une telle articulation présente des problèmes notamment pour le transport de cette timonerie et pour l'installation de celle-ci sur le véhicule automobile. Ainsi, il est nécessaire de limiter les degrés de liberté de la timonerie aussi bien lors de son transport que lors de son installation.

On connaît des éléments de blocage permettant de relier la bielle à des paliers permettant la fixation de la timonerie sur le véhicule automobile de sorte que la timonerie soit dans une position de transport. Les éléments de blocage connus dans l'état de la technique peuvent se présenter sous différentes formes, comme par exemple sous une forme de pince, afin d'assurer le blocage de cette timonerie dans une position de transport et d'installation, c'est-à-dire une position dans laquelle tout mouvement d'un palier de la timonerie par rapport à la bielle est empêché.

Cependant, les éléments de blocage connus sont à usage unique et sont enlevés par découpe par exemple après installation de la timonerie sur le véhicule automobile. Ainsi, il est nécessaire d'utiliser des outils, généralement coupants, afin de pouvoir libérer la timonerie. Par ailleurs, de tels éléments de blocage génèrent des débris qu'il sera nécessaire de traiter ultérieurement, ce qui engendre des coûts supplémentaires.

Le document DE 103 13 540 A1 montre un dispositif de maintien selon le préambule de la première revendication.

La présente invention a pour objectif de pallier au moins partiellement les inconvénients de l'art antérieur exposés ci-dessus.

Un autre objectif de la présente invention, différent de l'objectif précédent, est de proposer un élément de blocage d'une timonerie d'un mécanisme d'essuyage notamment pour véhicule pouvant être retiré sans nécessiter d'outils.

Un autre objectif de la présente invention, différent des objectifs précédents, est de proposer un élément de blocage qui peut rester sur la timonerie du mécanisme d'essuyage, une fois celle-ci installée, de manière à réduire la production de déchets à traiter.

Un autre objectif de la présente invention, différent des objectifs précédents est de proposer un élément de blocage qui est simple d'installation sur une timonerie d'un mécanisme d'essuyage.

Encore un objectif de la présente invention, différent des objectifs précédents, est de proposer un élément de blocage qui permet une libération simple de la timonerie du mécanisme d'essuyage.

A cet effet, afin d'atteindre au moins un des objectifs précités au moins partiellement, la présente invention a pour objet un dispositif de maintien d'une timonerie d'un mécanisme d'essuyage dans une position de transport comportant :
- un clip comprenant deux bras élastiques destiné à coopérer avec un fût d'un palier de la timonerie, et
- une agrafe de maintien destinée à coopérer avec une bielle de la timonerie, l'agrafe de maintien étant reliée au clip de sorte qu'à l'état monté, le dispositif de maintien relie la bielle au fût de manière fixe dans une position rapprochée du fût par rapport à la bielle.

Le dispositif de maintien assure le blocage de la timonerie en position de transport en bloquant la position relative de la bielle par rapport au fût de la timonerie. Avantageusement, ce dispositif de maintien est installé sur la bielle et sur le fût par encliquetage. Ainsi, l'installation de ce dispositif de maintien ne nécessite pas d'outils. Par ailleurs, la libération de cette timonerie se fait de manière simple et ne nécessite pas l'utilisation d'outils non plus.

Le dispositif de maintien peut comporter en outre une ou plusieurs des caractéristiques suivantes prises seules ou en combinaison.

Les bras élastiques comportent chacun des pattes de fixation, notamment au niveau des extrémités des bras élastiques, lesdites pattes de fixation étant destinées à coopérer avec une forme complémentaire présente sur le fût.

L'agrafe de maintien comporte un bras de retenue présentant à son extrémité libre un organe de verrouillage destiné à coopérer avec la bielle.

Avantageusement, l'agrafe de maintien présente une forme générale en U dont le fond est destiné à maintenir la bielle contre une manivelle de la timonerie.

Une des branches du U présente l'organe de verrouillage.

Selon un mode de réalisation, le dispositif de maintien est réalisé en un matériau plastique.

La présente invention a également pour objet un palier d'un mécanisme d'essuyage comprenant un fût comprenant une portion de plus faible diamètre destinée à coopérer avec le clip d'un dispositif de maintien tel que défini précédemment.

La palier peut comprendre en outre une ou plusieurs des caractéristiques suivantes prises seules ou en combinaison.

Le fût comprend au moins une première paire de renfoncements destinés à coopérer avec des pattes de fixation portées par les extrémités des bras élastiques.

Le fût présente une première paire et une deuxième paire de renfoncements.

Avantageusement, chaque paire de renfoncements comprend des chanfreins pour faciliter le déplacement du dispositif de maintien.

La première paire de renfoncements peut définir une position déverrouillée du dispositif de maintien.

La deuxième paire de renfoncements peut définir une position de verrouillage du dispositif de maintien.

La présente invention a également pour objet un sous-ensemble de timonerie d'un mécanisme d'essuyage comprenant :
- un palier comprenant un fût,
- une manivelle articulée sur le palier, présentant une première extrémité reliée au palier et une deuxième extrémité portant une liaison rotule permettant l'articulation d'une bielle,
- une bielle dont une extrémité est reliée par la liaison rotule à la manivelle, et
- un dispositif de maintien tel que défini précédemment.

Selon un aspect, le palier présente un fût tel que défini précédemment coopérant avec le clip du dispositif de maintien.

La présente invention a également pour objet une timonerie d'un mécanisme d'essuyage comprenant un premier et un deuxième sous-ensembles de timonerie reliés entre eux par une bielle, au moins un des premier et deuxième sous-ensembles de timonerie est un sous-ensemble de timonerie tel que défini précédemment, ledit au moins un des premier et deuxième sous-ensembles de timonerie étant notamment bloqué dans la position de transport de la timonerie à l'aide du dispositif de maintien.

Le blocage du premier ou du deuxième sous-ensemble de timonerie dans la position de transport de la timonerie à l'aide du dispositif de maintien est réversible.

La timonerie comprend en outre un moteur relié à au moins une manivelle, ledit moteur étant configuré pour permettre le déplacement en translation de la bielle via la manivelle.

Selon un mode de réalisation, le moteur est installé d'un deuxième côté de la timonerie.

Selon un mode de réalisation particulier, la timonerie présente un dispositif de maintien disposé sur le premier ou sur le deuxième sous-ensembles de timonerie de manière à bloquer chaque extrémité de la bielle dans la position de transport de la timonerie.

La présente invention a également pour objet un procédé de mise en place d'un dispositif de maintien tel que défini précédemment sur un sous-ensemble de timonerie comme défini ci-dessus, le procédé de mise en place comprenant au moins :
- une étape de fixation du clip sur le fût, et
- une étape de fixation de l'agrafe de maintien sur la bielle.

Selon une première variante de mise en place, l'étape de fixation du clip sur le fût est préalable à l'étape de fixation de l'agrafe de maintien sur la bielle, le clip étant fixé sur le fût au niveau d'une position relevée de montage puis déplacé vers une position abaissée de transport de manière à ce que l'agrafe de maintien coopère avec la bielle de sorte que la position relative de la bielle par rapport au fût soit fixe.

Selon une deuxième variante de mise en place, l'étape de fixation de l'agrafe de maintien sur la bielle est préalable à l'étape de fixation du clip sur le fût, l'étape de fixation du clip sur le fût se faisant au niveau d'une position abaissée de transport de sorte que la position relative de la bielle par rapport au fût soit fixe.

Selon une première variante de libération de la timonerie, le dispositif de maintien libère la timonerie par écartement du bras de retenue de l'agrafe de maintien puis par déplacement du dispositif de maintien d'une position abaissée de transport vers une position relevée de montage.

Selon cette première variante de libération, le dispositif de maintien reste sur le fût après libération de la timonerie.

Selon une deuxième variante de libération de la timonerie, le dispositif de maintien libère la timonerie par écartement des bras élastiques du fût.

Selon cette deuxième variante de libération, le dispositif de maintien reste sur la bielle après libération de la timonerie.

Selon une autre variante, le dispositif de maintien est enlevé de la timonerie après libération de celle-ci.

Le dispositif de maintien est installé côté conducteur ou côté passager sur la timonerie.

D'autres avantages et caractéristiques de la présente invention apparaîtront plus clairement à la lecture de la description suivante, donnée à titre illustratif et non limitatif, et des dessins annexés dans lesquels :
- la figure 1 est une représentation schématique en perspective d'une timonerie bloquée dans une position de transport à l'aide d'un dispositif de maintien selon la présente invention,
- la figure 2 est une représentation schématique en perspective d'un sous-ensemble de timonerie bloqué dans la position de transport à l'aide du dispositif de maintien,
- la figure 3 est une représentation schématique en perspective d'un palier présentant un fût selon un mode de réalisation particulier,
- la figure 4 est une représentation schématique en perspective du dispositif de maintien permettant le blocage de la timonerie de la figure 1,
- la figure 5A est une représentation schématique en perspective d'un sous-ensemble de timonerie au cours d'une étape de blocage d'une bielle contre un fût,
- la figure 5B est une représentation schématique en perspective du sous-ensemble de timonerie de la figure 5A à l'issue de l'étape de blocage,
- la figure 5C est une représentation schématique en perspective du sous-ensemble de timonerie de la figure 5A après une étape de libération de la bielle, et
- la figure 6 est une représentation schématique partielle en perspective de la timonerie installée sur un véhicule automobile.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description suivante, il est fait référence à un premier et à un deuxième côtés de la timonerie, à une première et à une deuxième extrémités pour la manivelle, à un premier et à un deuxième axes de rotation du sous-ensemble de timonerie, à une première et une deuxième paires de renfoncements sur le fût, et à un premier et à un deuxième sous-ensembles de timonerie. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la disposition de la timonerie sur le véhicule automobile, son fonctionnement, ou encore son installation.

Dans la description suivante, on entend en particulier par « position de transport », une position dans laquelle au moins une extrémité de la bielle et une manivelle à laquelle est reliée cette extrémité de la bielle forment un angle minimal. Plus précisément, au moins cette extrémité de la bielle se trouve dans une position rapprochée du palier sur lequel la manivelle est articulée de sorte que la timonerie présente un encombrement minimal lorsqu'elle se trouve dans la position de transport.

Par ailleurs, on entend dans la description suivante par « état monté », l'état monté du dispositif de maintien. Plus précisément, cela correspond à la position de verrouillage du dispositif de maintien, c'est-à-dire lorsqu'il bloque la timonerie dans la position de transport.

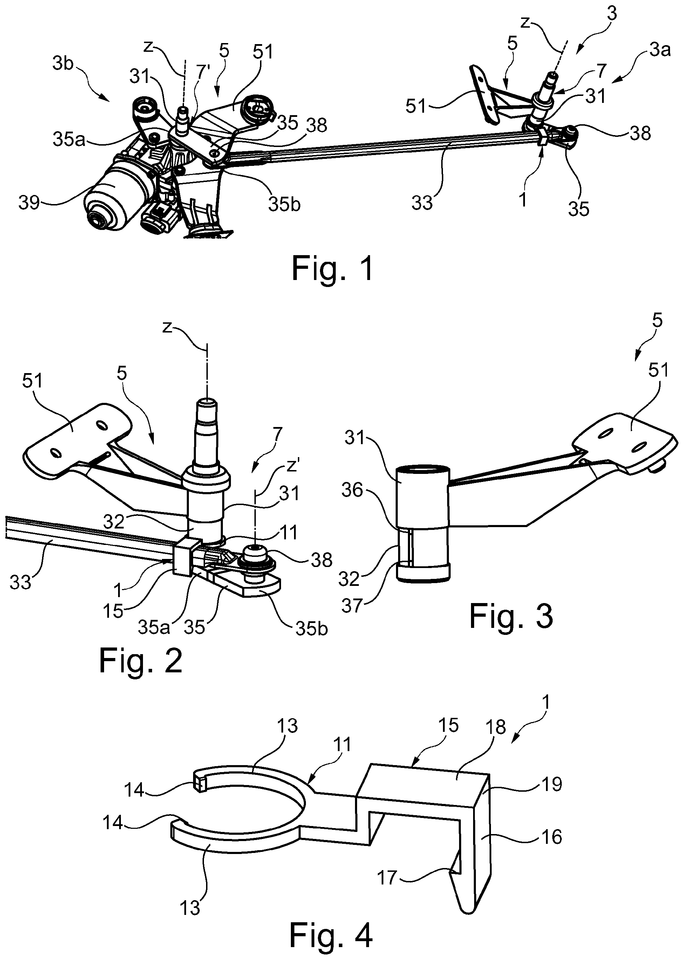

En référence aux figures 1 à 4, il est représenté une timonerie 3 d'un mécanisme d'essuyage bloquée de manière réversible dans une position de transport. La timonerie 3 comprend un premier 7 (mieux visible sur la figure 2) et un deuxième 7' sous-ensembles de timonerie reliés l'un à l'autre par une bielle 33, et un moteur 39 configuré pour déplacer la bielle 33 en translation et animer selon un mouvement alternatif de pivotement des axes (Z) destinés à porter des bras balai (non représentés). Les premier 7 et deuxième 7' sous-ensembles de timonerie sont disposés respectivement d'un premier 3a et d'un deuxième 3b côtés de la timonerie 3.

Les premier 7 et deuxième 7' sous-ensembles de timonerie comprennent un palier 5 comprenant un fût 31, une manivelle 35 articulée sur le palier 5, et un dispositif de maintien 1 (mieux visible sur la figure 4). Le moteur 39 est relié à au moins une manivelle 35 de manière à permettre le déplacement en translation de la bielle 33 grâce à la mise en mouvement de cette manivelle 35. Le moteur 39 est disposé du deuxième côté 3b de la timonerie 3. Le deuxième côté 3b de la timonerie 3 correspond généralement au côté conducteur d'un véhicule automobile lorsque la timonerie 3 est installée sur celui-ci. Selon une variante, le deuxième côté 3b peut correspondre au côté passager du véhicule automobile une fois la timonerie 3 installée sur celui-ci.

La manivelle 35 de chacun des premier 7 et deuxième 7' sous-ensembles de timonerie présente une première extrémité 35a reliée au palier 5, par une liaison pivot par exemple, et une deuxième extrémité 35b portant une liaison rotule 38. La liaison rotule 38 est reliée à une extrémité de la bielle 33 et permet l'articulation de cette bielle 33 afin de permettre son déplacement en translation.

En référence à la figure 4, le dispositif de maintien 1 comporte un clip 11 destiné à coopérer avec le fût 31 et une agrafe de maintien 15 destinée à coopérer avec l'extrémité de la bielle 33. Selon le mode de réalisation particulier de la figure 1, afin de maintenir la timonerie 3 fixe dans la position de transport, le clip 11 coopère avec le fût 31 de manière à ce que la position relative de l'extrémité de la bielle 33 coopérant avec l'agrafe de maintien 15 soit fixe par rapport au fût 31. Ainsi, l'articulation de la bielle 33 sur la liaison rotule 38 est bloquée.

Le dispositif de maintien 1 peut être réalisé en un matériau plastique. L'utilisation d'un tel matériau permet au dispositif de maintien 1, et notamment au clip 11 et à l'agrafe de maintien 15 de présenter des déformations réversibles.

Le clip 11 comprend deux bras élastiques 13 destinés à coopérer avec le fût 31 de la timonerie 3. Selon le mode de réalisation particulier de la figure 4, les bras élastiques 13 peuvent comporter chacun des pattes de fixation 14, notamment au niveau des extrémités des bras élastiques 13. Ces pattes de fixation 14 sont destinées à coopérer avec des formes complémentaires présentes sur le fût 31. Cette coopération est décrite plus en détail ultérieurement.

Par ailleurs, l'agrafe de maintien 15 est destinée à coopérer par exemple avec l'extrémité de la bielle 33 reliée au premier sous-ensemble de timonerie 7 selon le mode de réalisation de la figure 1. L'agrafe de maintien 15 est reliée au clip 11 de sorte qu'à l'état monté, le dispositif de maintien 1 relie l'extrémité de la bielle 33 dans une position rapprochée du fût 31 de manière à maintenir de façon fixe la bielle 33 par rapport au fût 31, comme cela est représenté en référence aux figures 1 et 2.

Selon le mode de réalisation particulier de la figure 4, l'agrafe de maintien 15 comporte un bras de retenue 16 présentant à son extrémité libre un organe de verrouillage 17 destiné à coopérer avec la bielle 33. La présence de l'organe de verrouillage 17 permet de renforcer la coopération entre la bielle 33 et l'agrafe de maintien 15.

Par ailleurs, l'agrafe de maintien 15 présente une forme générale en U dont le fond 18 est destiné à maintenir la bielle 33 contre la manivelle 35 de la timonerie 3. Selon ce mode de réalisation particulier, une des branches 19 du U présente l'organe de verrouillage 17. Dans le cas présent, c'est la branche 19 qui est la plus éloignée du clip 11.

En référence à la figure 2, il est représenté plus en détail le premier sous-ensemble de timonerie 7 de la figure 1. Le premier sous-ensemble de timonerie 7 présente un premier axe de rotation Z destiné à porter un bras balai et permettant le déplacement en rotation de la deuxième extrémité 35b de la manivelle 35 autour du fût 31 et un deuxième axe de rotation Z' permettant le déplacement de l'extrémité de la bielle 33 reliée à la liaison rotule 38 par rapport au fût 31.

Le fût 31 coopère avec les bras élastiques 13 du clip 11 afin d'assurer la fixation du dispositif de maintien 1 sur le fût 31. Selon le mode de réalisation particulier des figures 2 et 3, le fût 31 peut présenter une portion 32 de plus faible diamètre coopérant avec le clip 11 du dispositif de maintien 1 afin de limiter le déplacement du dispositif de maintien 1 parallèlement au premier axe de rotation Z.

En référence à la figure 3, le fût 31 peut présenter des formes complémentaires coopérant avec les pattes de fixation 14. Ces formes complémentaires correspondent à au moins une première paire de renfoncements 36. Selon le mode de réalisation particulier de la figure 3, le fût 31 présente une première paire 36 et une deuxième paire 37 de renfoncements définissant respectivement une position déverrouillée (ici une position relevée de montage) et une position de verrouillage (ici une position abaissée de transport) dans laquelle la position relative entre le fût 31 et la bielle 33 est fixe. La présence, notamment de la deuxième paire de renfoncements 37 permet de prévenir la rotation du clip 11 sur le fût 31, et permet donc de rigidifier la liaison entre la bielle 33 et le fût 31 lorsque la timonerie 3 est dans sa position de transport. Par ailleurs, chaque paire de renfoncement 36, 37 peut comprendre des chanfreins pour faciliter le déplacement du dispositif de maintien 1 entre la position de verrouillage et la position déverrouillée du dispositif de maintien 1 et inversement.

La présence du dispositif de maintien 1 sur le premier sous-ensemble de timonerie 7 permet de prévenir toute rotation de la manivelle 35 autour du premier axe de rotation Z et également toute rotation de la bielle 33 autour du deuxième axe de rotation Z', bloquant ainsi le premier sous-ensemble de timonerie 7 dans une disposition fixe de la bielle 33 par rapport au fût 31.

Selon le mode de réalisation particulier de la figure 1, la timonerie 3 présente un seul dispositif de maintien 1 disposé du premier côté 3a de la timonerie 3 afin de bloquer de manière réversible le premier sous-ensemble de timonerie 7 dans la position de transport de la timonerie 3.

Selon un autre mode de réalisation non représenté ici, la timonerie 3 peut présenter deux dispositifs de maintien 1, l'un étant disposé du premier côté 3a de la timonerie 3 et l'autre étant disposé du deuxième côté 3b de la timonerie 3 afin de bloquer de manière réversible le mouvement relatif de chaque extrémités de la bielle 33 par rapport au fût 31 du premier 7 et du deuxième 7' sous-ensembles de timonerie respectivement.

Selon un autre mode de réalisation non représenté ici, seul le deuxième côté 3b de la timonerie 3 présente le dispositif de maintien 1 afin de bloquer de manière réversible le deuxième sous-ensemble de timonerie 7' dans la position de transport de la timonerie.

Avantageusement, le dispositif de maintien 1 permet d'enlever des degrés de liberté de mouvement de certaines pièces de la timonerie 3, ce qui facilite son transport. Par ailleurs, l'installation de cette timonerie 3 sur le véhicule automobile est également facilitée grâce au dispositif de maintien 1 qui bloque la rotation des différents éléments de la timonerie 3 autour du premier Z et du deuxième Z' axes de rotation.

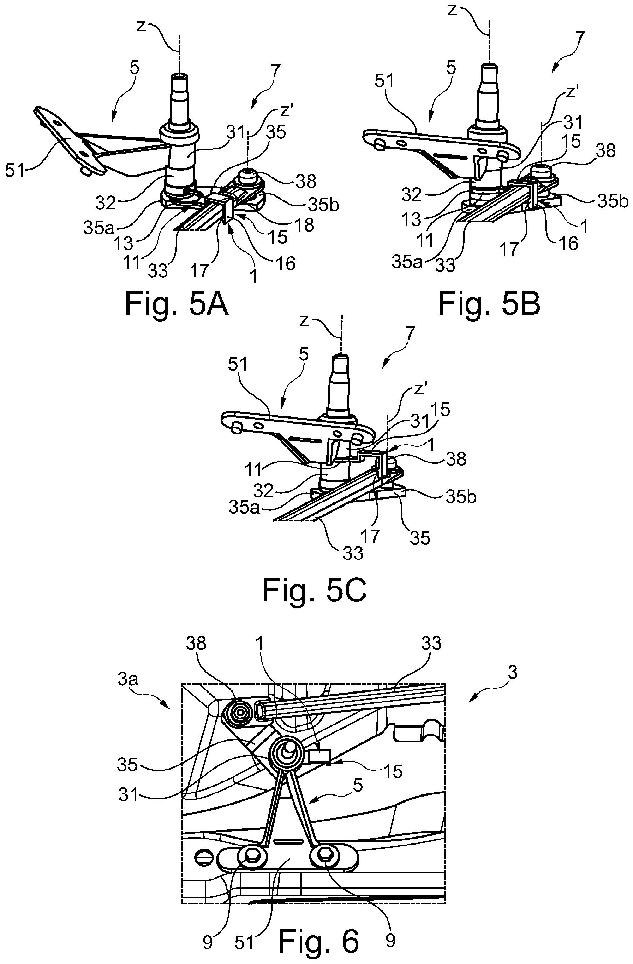

Le procédé de mise en place du dispositif de maintien 1 sur la timonerie 3 est décrit plus en détail en référence aux figures 5A et 5B. La mise en place du dispositif de maintien 1 sur la timonerie 3 comprend au moins une étape a de fixation du clip 11 sur le fût 31, et une étape b de fixation de l'agrafe de maintien 15 sur la bielle 33.

Selon le mode de réalisation particulier des figures 5A et 5B, l'étape b de fixation de l'agrafe de maintien 15 sur la bielle 33 est préalable à l'étape a de fixation du clip 11 sur le fût 31. L'étape a de fixation du clip 11 sur le fût 31 se fait ensuite au niveau de la position de verrouillage de sorte que la position relative de la bielle 33 par rapport au fût 31 soit fixe. Plus précisément lors de l'étape a de fixation du clip 11 sur le fût 31, la bielle 33 munie du dispositif de maintien 1 est tournée de manière à ce que les bras élastiques 13 coopèrent avec la portion 32 de plus faible diamètre du fût 31. Au cours de cette étape a, les pattes de fixation 14 coopèrent avec la deuxième paire de renfoncements 37 portée par le fût 31 de manière à assurer le maintien de la position relative de la bielle 33 par rapport au fût 31.

Selon une variante non représentée ici, l'étape a de fixation du clip 11 sur le fût 31 peut être préalable à l'étape b de fixation de l'agrafe de maintien 15 sur la bielle 33, le clip 11 étant fixé initialement sur le fût 31 au niveau de la première paire de renfoncements 36 définissant ainsi une position déverrouillée. La bielle 33 est ensuite rapprochée du fût 31, et le clip 11 est enfin déplacé vers sa position de verrouillage afin de coopérer avec la deuxième paire de renfoncements 37 de manière à ce que l'agrafe de maintien 15 coopère avec la bielle 33 de sorte que la position relative de la bielle 33 par rapport au fût 31 soit fixe.

Ainsi, quel que soit l'ordre des étapes a, b permettant la fixation du dispositif de maintien 1, l'utilisation d'outils n'est pas nécessaire. En effet, le clip 11 et l'agrafe de maintien 15 permettent d'installer aisément le dispositif de maintien 1 sur la timonerie 3 par simple encliquetage. Par ailleurs, un tel dispositif de maintien 1 peut être utilisé pour maintenir une timonerie 3 dans la position de transport présentant une bielle 33 aussi bien pleine que présentant un profilé en U.

En référence aux figures 5B et 5C, il est représenté une procédé de libération de la bielle 33. Ce procédé de libération est avantageusement mis en œuvre après l'installation de la timonerie 3 sur le véhicule automobile comme cela est décrit plus en détail sur la figure 6.

Comme décrit précédemment, en référence à la figure 5B, la timonerie 3 se trouve dans la position de transport. Selon le mode de réalisation particulier des figures 5B et 5C, la libération de la timonerie 3 se fait par écartement du bras de retenue 16 de l'agrafe de maintien 15 puis par déplacement du dispositif de maintien 1 de sa position de verrouillage vers sa position déverrouillée. Plus précisément, l'écartement du bras de retenue 16 est réalisé par une traction sur la branche 19 du U formant l'agrafe de maintien 15 dans une direction opposée au clip 11 de manière à élargir l'espacement des branches du U. Plus précisément, l'écartement du bras de retenue 16 permet d'élargir l'espacement des branches du U de manière à ce que l'organe de verrouillage 17 ne soit plus au contact de la bielle 33. Le dispositif de maintien 1, et plus précisément le clip 11, est ensuite déplacé par glissement à l'intérieur de la portion 32 du fût 31. Plus particulièrement, les pattes de fixation 14 des bras élastiques 13 quittent la deuxième paire de renfoncements 37 pour coopérer avec la première paire de renfoncements 36 en fin de déplacement du clip 11, comme cela est représenté en référence à la figure 5C. Une fois le dispositif de maintien 1 déplacé au niveau de sa position déverrouillée, la bielle 33 et la manivelle 35 sont de nouveau mobiles autour des premier Z et deuxième Z' axes de rotation.

Selon un autre mode de réalisation non représenté ici, le dispositif de maintien 1 peut libérer la timonerie par écartement des bras élastiques 13 du fût 31. Cet écartement des bras élastiques 13 du fût 31 permet de retirer le clip 11 du dispositif de maintien 1 du fût 31 et ainsi de libérer la bielle 33.

Ainsi, la libération de la timonerie 3 après son installation éventuelle sur le véhicule ne nécessite pas l'utilisation d'outils et peut être réalisée aisément et de manière simple.

En référence à la figure 6, il est représenté partiellement la timonerie 3 installée sur le véhicule automobile à l'aide de vis de fixation 9 configurées pour solidariser le palier 5, et notamment une platine 51 portée par ce palier 5, à un élément du véhicule automobile. Selon cet exemple de réalisation, la bielle 33 est libre de bouger en translation sous l'effet du moteur 39 (représenté sur la figure 1). Plus particulièrement, la figure 6 correspond au premier côté 3a de la timonerie 3. Selon le mode de réalisation particulier de la figure 6, la bielle 33 est libérée selon le procédé de libération décrit en référence aux figures 5B et 5C. Avantageusement, le dispositif de maintien 1 peut rester sur le fût 31 au niveau de sa position déverrouillée. Le fait que le dispositif de maintien 1 reste sur le fût 31 ne nuit pas au fonctionnement de la timonerie 3 car la bielle 33 ne passe pas par sa position de transport au cours de ses déplacements de va et vient lors de l'essuyage.

Selon un autre mode de réalisation non représenté ici, le dispositif de maintien 1 peut rester sur la bielle 33 après libération de la timonerie 3.

Avantageusement, le fait de laisser le dispositif de maintien 1 sur la timonerie 3 permet d'utiliser de nouveau ce dernier si nécessaire afin de bloquer de nouveau la timonerie dans sa position de transport. Par ailleurs, la possibilité de laisser le dispositif de maintien 1 sur la timonerie 3 après installation de celle-ci permet de limiter la quantité de déchets à traiter.

Les différents modes de réalisation fournis ici sont décrits uniquement à titre illustratif et non limitatif. En effet, il est tout à fait possible pour l'homme de l'art d'utiliser le dispositif de maintien 1 avec un fût 31 ne présentant pas de portion 32 avec un diamètre inférieur sans sortir du cadre de la présente invention. Par ailleurs, l'homme de l'art pourra tout à fait retirer le dispositif de maintien 1 de la timonerie 3 après son installation sur le véhicule automobile sans sortir du cadre de la présente invention. De plus, l'homme de l'art pourra utiliser tout autre matériau que du plastique afin de former le dispositif de maintien 1 sans sortir du cadre de la présente description, l'utilisation de plastique pour le dispositif de maintien 1 ne concernant qu'un mode de réalisation préféré.

Ainsi, le maintien en place de manière réversible dans une position de transport d'une timonerie 3 est possible grâce au dispositif de maintien 1 décrit précédemment. Avantageusement, le dispositif de maintien 1 est installé sur la timonerie 3 sans nécessiter d'outils et la libération de la timonerie 3 est également possible sans utiliser d'outils. Par ailleurs, l'utilisation d'un tel dispositif de maintien 1 permet de limiter les déchets à traiter du fait que celui-ci reste sur la timonerie 3 après son installation sur le véhicule automobile.

## Revendications

1. Dispositif de maintien (1) d'une timonerie (3) d'un mécanisme d'essuyage dans une position de transport, **caractérisé en ce que** le dispositif de maintien (1) comporte :
• un clip (11) comprenant deux bras élastiques (13) destiné à coopérer avec un fût (31) d'un palier (5) de la timonerie (3), et
• une agrafe de maintien (15) destinée à coopérer avec une bielle (33) de la timonerie (3), l'agrafe de maintien (15) étant reliée au clip (11) de sorte qu'à l'état monté, le dispositif de maintien (1) relie la bielle (33) au fût (31) de manière fixe dans une position rapprochée du fût (31) par rapport à la bielle (33).

2. Dispositif de maintien (1) selon la revendication précédente, **caractérisé en ce que** les bras élastiques (13) comportent chacun des pattes de fixation (14), notamment au niveau des extrémités des bras élastiques (13), lesdites pattes de fixation (14) étant destinées à coopérer avec une forme complémentaire présente sur le fût (31).

3. Dispositif de maintien (1) selon l'une quelconque des revendications précédentes, **caractérisé en ce que** l'agrafe de maintien (15) comporte un bras de retenue (16) présentant à son extrémité libre un organe de verrouillage (17) destiné à coopérer avec la bielle (33).

4. Dispositif de maintien (1) selon la revendication 3, **caractérisé en ce que** l'agrafe de maintien (15) présente une forme générale en U dont le fond (18) est destiné à maintenir la bielle (33) contre une manivelle (35) de la timonerie (3).

5. Dispositif de maintien (1) selon la revendication 4, **caractérisé en ce qu'**une des branches (19) du U présente l'organe de verrouillage (17).

6. Palier (5) d'un mécanisme d'essuyage comprenant un fût (31) **caractérisé en ce que** le fût (31) comprend une portion (32) de plus faible diamètre destinée à coopérer avec le clip (11) d'un dispositif de maintien (1) selon l'une quelconque des revendications précédentes.

7. Palier (5) selon la revendication précédente prise en combinaison avec la revendication 2, **caractérisé en ce que** le fût (31) comprend au moins une première paire de renfoncements (36) destinés à coopérer avec des pattes de fixation (14) portées par les extrémités des bras élastiques (13).

8. Palier (5) selon la revendication précédente, **caractérisé en ce que** le fût (31) présente une première paire (36) et une deuxième paire (37) de renfoncements.

9. Palier (5) selon la revendication 8, **caractérisé en ce que** chaque paire de renfoncements (36, 37) comprend des chanfreins pour faciliter le déplacement du dispositif de maintien (1).

10. Sous-ensemble de timonerie (7) d'un mécanisme d'essuyage **caractérisé en ce qu'**il comprend :
• un palier (5) comprenant un fût (31),
• une manivelle (35) articulée sur le palier (5), présentant une première extrémité (35a) reliée au palier (5) et une deuxième extrémité (35b) portant une liaison rotule (38) permettant l'articulation d'une bielle (33),
• une bielle (33) dont une extrémité est reliée par la liaison rotule (38) à la manivelle (35), et
• un dispositif de maintien (1) selon l'une quelconque des revendications 1 à 5.

11. Sous-ensemble timonerie (7) selon la revendication précédente, **caractérisé en ce que** l'au moins un palier (5) présente un fût (31) selon l'une quelconque des revendications 6 à 9 coopérant avec le clip (11) du dispositif de maintien (1).

12. Timonerie (3) d'un mécanisme d'essuyage **caractérisé en ce qu'**elle comprend un premier (7) et un deuxième (7') sous-ensembles de timonerie reliés entre eux par une bielle (33), **en ce qu'**au moins un des premier (7) et deuxième (7') sous-ensembles de timonerie est un sous-ensemble de timonerie (7) selon l'une quelconque des revendications 10 ou 11, ledit au moins un des premier (7) et deuxième (7') sous-ensembles de timonerie étant notamment bloqué dans la position de transport de la timonerie (3) à l'aide du dispositif de maintien (1).

13. Procédé de mise en place d'un dispositif de maintien (1) selon l'une quelconque des revendications 1 à 5 sur un sous-ensemble de timonerie (7) selon l'une des revendications 10 ou 11, **caractérisé en ce qu'**il comprend au moins :
• une étape (a) de fixation du clip (11) sur le fût (31), et
• une étape (b) de fixation de l'agrafe de maintien (15) sur la bielle (33).

## Patentansprüche

1. Haltevorrichtung (1) zum Halten eines Gestänges (3) eines Wischmechanismus in einer Transportposition, **dadurch gekennzeichnet, dass** die Haltevorrichtung (1) aufweist:
• einen Clip (11), der zwei elastische Arme (13) umfasst und dazu bestimmt ist, mit einem Schaft (31) eines Lagers (5) des Gestänges (3) zusammenzuwirken, und
• eine Halteklammer (15), die dazu bestimmt ist, mit einem Koppel (33) des Gestänges (3) zusammenzuwirken, wobei die Halteklammer (15) derart mit dem Clip (11) verbunden ist, dass im zusammengebauten Zustand die Haltevorrichtung (1) das Koppel (33) fest mit dem Schaft (31) in einer bezüglich des Koppels (33) angenäherten Position des Schaftes (31) verbindet.

2. Haltevorrichtung (1) nach dem vorhergehenden Anspruch, **dadurch gekennzeichnet, dass** die elastischen Arme (13) jeweils Befestigungslaschen (14) aufweisen, insbesondere an den Enden der elastischen Arme (13), wobei die Befestigungslaschen (14) dazu bestimmt sind, mit einer am Schaft (31) vorhandenen komplementären Form zusammenzuwirken.

3. Haltevorrichtung (1) nach einem der vorhergehenden Ansprüche, **dadurch gekennzeichnet, dass** die Halteklammer (15) einen Haltearm (16) aufweist, der an seinem freien Ende ein Verriegelungselement (17) aufweist, das dazu bestimmt ist, mit dem Koppel (33) zusammenzuwirken.

4. Haltevorrichtung (1) nach Anspruch 3, **dadurch gekennzeichnet, dass** die Halteklammer (15) eine im Wesentlichen U-förmige Form aufweist, deren Boden (18) dazu bestimmt ist, das Koppel (33) gegen eine Kurbel (35) des Gestänges (3) gedrückt zu halten.

5. Haltevorrichtung (1) nach Anspruch 4, **dadurch gekennzeichnet, dass** einer der Schenkel (19) des "U" ein Verriegelungselement (17) aufweist.

6. Lager (5) eines Wischmechanismus, welches einen Schaft (31) umfasst, **dadurch gekennzeichnet, dass** der Schaft (31) einen Abschnitt (32) mit kleinerem Durchmesser umfasst, der dazu bestimmt ist, mit dem Clip (11) einer Haltevorrichtung (1) nach einem der vorhergehenden Ansprüche zusammenzuwirken.

7. Lager (5) nach dem vorhergehenden Anspruch in Kombination mit Anspruch 2, **dadurch gekennzeichnet, dass** der Schaft (31) wenigstens ein erstes Paar von Vertiefungen (36) umfasst, die dazu bestimmt sind, mit Befestigungslaschen (14) zusammenzuwirken, die von den Enden der elastischen Arme (13) getragen werden.

8. Lager (5) nach dem vorhergehenden Anspruch, **dadurch gekennzeichnet, dass** der Schaft (31) ein erstes Paar (36) und ein zweites Paar (37) von Vertiefungen aufweist.

9. Lager (5) nach Anspruch 8, **dadurch gekennzeichnet, dass** jedes Paar von Vertiefungen (36, 37) Abfasungen umfasst, um die Verlagerung der Haltevorrichtung (1) zu erleichtern.

10. Gestänge-Unterbaugruppe (7) eines Wischmechanismus, **dadurch gekennzeichnet, dass** sie umfasst:
• ein Lager (5), das einen Schaft (31) umfasst,
• eine Kurbel (35), die an dem Lager (5) angelenkt ist und ein erstes Ende (35a), das mit dem Lager (5) verbunden ist, und ein zweites Ende (35b), das eine Kugelgelenkverbindung (38) trägt, welche die Anlenkung eines Koppels (33) ermöglicht, aufweist,
• ein Koppel (33), dessen eines Ende über die Kugelgelenkverbindung (38) mit der Kurbel (35) verbunden ist, und
• eine Haltevorrichtung (1) nach einem der Ansprüche 1 bis 5.

11. Gestänge-Unterbaugruppe (7) nach dem vorhergehenden Anspruch, **dadurch gekennzeichnet, dass** das wenigstens eine Lager (5) einen Schaft (31) nach einem der Ansprüche 6 bis 9 aufweist, der mit dem Clip (11) der Haltevorrichtung (1) zusammenwirkt.

12. Gestänge (3) eines Wischmechanismus, **dadurch gekennzeichnet, dass** es eine erste (7) und eine zweite (7') Gestänge-Unterbaugruppe umfasst, die durch ein Koppel (33) miteinander verbunden sind, und dadurch, dass wenigstens eine von der ersten (7) und der zweiten (7') Gestänge-Unterbaugruppe eine Gestänge-Unterbaugruppe (7) nach einem der Ansprüche 10 oder 11 ist, wobei die wenigstens eine von der ersten (7) und der zweiten (7') Gestänge-Unterbaugruppe insbesondere in der Transportposition des Gestänges (3) mithilfe der Haltevorrichtung (1) blockiert wird.

13. Verfahren zur Anbringung einer Haltevorrichtung (1) nach einem der Ansprüche 1 bis 5 an einer Gestänge-Unterbaugruppe (7) nach einem der Ansprüche 10 oder 11, **dadurch gekennzeichnet, dass** es wenigstens umfasst:
• einen Schritt (a) der Befestigung des Clips (11) am Schaft (31), und
• einen Schritt (b) der Befestigung der Halteklammer (15) am Koppel (33).

## Claims

1. Device (1) for obtaining a linkage (3) of a wiper mechanism in a transport position, **characterized in that** the retaining device (1) includes:
• a clip (11) comprising two elastic arms (13) intended to cooperate with a bush (31) of a bearing (5) of the linkage (3), and
• a retaining staple (15) intended to cooperate with a link (33) of the linkage (3), the retaining staple (15) being connected to the clip (11) so that in the mounted state the retaining device (1) connects the link (33) to the bush (31) in a fixed manner in a close position of the bush (31) relative to the link (33).

2. Retaining device (1) according to the preceding claim, **characterized in that** the elastic arms (13) each include fixing lugs (14), in particular at the level of the ends of the elastic arms (13), said fixing lugs (14) being intended to cooperate with a complementary shape present on the bush (31).

3. Retaining device (1) according to either one of the preceding claims, **characterized in that** the retaining staple (15) includes a retaining arm (16) having at its free end a locking member (17) intended to cooperate with the link (33).

4. Retaining device (1) according to Claim 3, **characterized in that** the retaining staple (15) is in the general shape of a U the bottom (18) of which is intended to hold the link (33) against a crank (35) of the linkage (3).

5. Retaining device (1) according to Claim 4, **characterized in that** one of the branches (19) of the U includes the locking member (17).

6. Bearing (5) of a wiper mechanism comprising a bush (31), **characterized in that** the bush (31) comprises a portion (32) of smaller diameter intended to cooperate with the clip (11) of a retaining device (1) according to any one of the preceding claims.

7. Bearing (5) according to the preceding claim in combination with Claim 2, **characterized in that** the bush (31) comprises at least one first pair of depressions (36) intended to cooperate with fixing lugs (14) carried by the ends of the elastic arms (13) .

8. Bearing (5) according to the preceding claim, **characterized in that** the bush (31) includes a first pair of depressions (36) and a second pair of depressions (37).

9. Bearing (5) according to Claim 8, **characterized in that** each pair of depressions (36, 37) comprises chamfers to facilitate the movement of the retaining device (1).

10. Linkage subassembly (7) of wiper mechanism, **characterized in that** it comprises:
• a bearing (5) comprising a bush (31),
• a crank (35) articulated to the bearing (5), having a first end (35a) connected to the bearing (5) and a second end (35b) carrying a ball joint (38) enabling the articulation of a link (33),
• a link (33) one end of which is connected by the ball joint (38) to the crank (35), and
• a retaining device (1) according to any one of Claims 1 to 5 .

11. Linkage subassembly (7) according to the preceding claim, **characterized in that** the at least one bearing (5) includes a bush (31) according to any one of Claims 6 to 9 cooperating with the clip (11) of the retaining device (1).

12. Linkage (3) of a wiper mechanism, **characterized in that** it comprises a first linkage subassembly (7) and a second linkage subassembly (7') connected to one another by a link (33), **in that** the first linkage subassembly (7) and/or the second linkage subassembly (7') is a linkage subassembly (7) according to either one of Claims 10 or 11, said first linkage subassembly (7) and/or second linkage subassembly (7') being in particular locked in the transport position of the linkage (3) with the aid of the retaining device (1).

13. Method of placing a retaining device (1) according to any one of Claims 1 to 5 on a linkage subassembly (7) according to either one of Claims 10 or 11, **characterized in that** it comprises at least:
• a step (a) of fixing the clip (11) to the bush (31), and
• a step (b) of fixing the retaining staple (15) to the link (33) .
